Europäisches Patentamt

European Patent Office

Office européen des brevets

(11) Publication number: **0 151 188 B1**

(12) **EUROPEAN PATENT SPECIFICATION**

(45) Date of publication of patent specification: **13.11.91**   (51) Int. Cl.⁵: **H04B 10/12, G02F 1/01, G02F 2/00**

(21) Application number: **84902728.9**

(22) Date of filing: **09.07.84**

(86) International application number: **PCT/JP84/00349**

(87) International publication number: **WO 85/00483 (31.01.85 85/03)**

(54) **METHOD FOR DIRECTLY TRANSMITTING IMAGES.**

(30) Priority: **11.07.83 JP 124630/83**
**11.07.83 JP 124631/83**
**11.07.83 JP 124632/83**

(43) Date of publication of application:
**14.08.85 Bulletin 85/33**

(45) Publication of the grant of the patent:
**13.11.91 Bulletin 91/46**

(84) Designated Contracting States:
**DE GB**

(56) References cited:
**JP-A- 5 197 903**
**JP-A-57 194 643**
**US-A- 4 142 773**

**Applied Physics Letters, vol. 28, No. 2, (1976), (New York), Amnoy Yariv, "Three-dimensional Pictorial Transmission in Optical Fibers", pages 88-89**

(73) Proprietor: **NIPPON TELEGRAPH AND TELE-PHONE CORPORATION**
**1-6 Uchisaiwaicho 1-chome Chiyoda-ku Tokyo(JP)**

(72) Inventor: **SAKAI, Jun-ichi**
**4-28-206, Toyo 2-chome**
**Koto-ku Tokyo 135(JP)**
Inventor: **SUGIMURA, Akira**
**3-19-106, Hanakoganei Minamimachi 1-chome**
**Kodaira-shi Tokyo 187(JP)**
Inventor: **KANAYA, Fumio**
**1368, Mutsuura Kanazawa-ku**
**Yokohama-shi Kanagawa 236(JP)**

(74) Representative: **Pike, Harold John et al**
**Abel & Imray Northumberland House 303-306 High Holborn**
**London, WC1V 7LH(GB)**

IEEE Journal of Quantum Electronics, Vol. QE-14, No. 9, (1979), (Piscataway, N.J.), Amnoy Yariv, "Phase Conjugate Optics and Real-Time Holography", pages 650-660

OPTICAL ENGINEERING, vol. 21, no. 2, March/April 1982, pages 156-182, D.M. Pepper, "Nonlinear optical phase conjugation"

## Description

[Technical Field]

This invention relates to a pictorial image direct transmission system for directly transmitting two-dimensional pictorial images by optical signals between two arbitrary locations. More particularly, it relates to a transmission system of transmitting two-dimensional pictorial images or spatial information as they are via an optical transmission line, e.g. (optical fibers), without being resolved into picture elements.

[Prior Art]

For transmitting two-dimensional pictorial image information, a whole picture is conventionally separated into a small group of picture elements, the information of such picture elements is consecutively scanned in accordance with a given rule on the side of the transmission, and converted to electric signals in time-series for transmission. On the receiver side they are scanned synchronously with scanning on the transmission side for recovering the two-dimensional pictorial image. As spatial information must be converted to time-series data in this system, the apparatus thereof inevitably becomes complicated and the amount of information transmittable by such a system is inconveniently limited.

The method of using an optical fiber bundle which comprises bundled multiple optical fiber cores has been proposed as a system for transmitting two-dimensional pictorial images in a spatially parallel state instead of being converted into time-series signals. More particularly, two-dimensional pictorial images are resolved into elements and each such picture element is assigned to one optical fiber for transmission in this system. This method is widely applied to endoscopes in the field of medical appliances. However, this technology requires optical fiber cores in the number corresponding to the number of picture elements. Moreover, this large number of optical fiber cores must be aligned on both ends at a high precision. This method can therefore hardly be applied to a long distance transmission line.

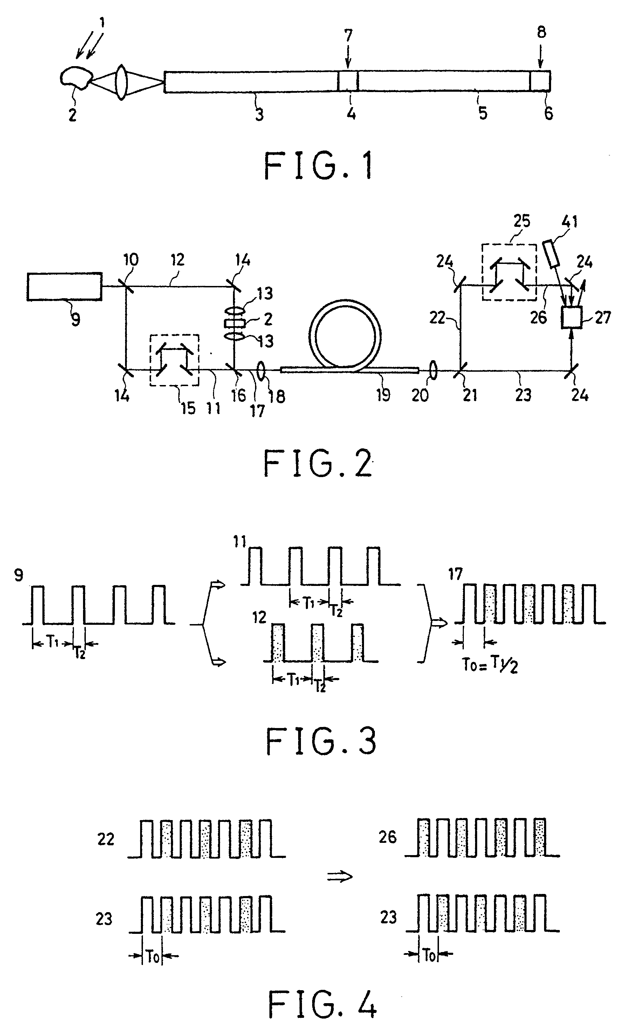

The method of transmitting two-dimensional pictorial images in one optical fiber without converting them into time-series signals was disclosed in A. Yariv's "Three-dimensional Pictorial Transmission in Optical Fibers" Appl. Phys. Lett. vol. 28, No. 2, pp. 88 - 89, 1976. The disclosed method is shown in Fig. 1. This method uses two optical fibers, 3 and 5, of identical characteristics and length and two non-linear optical materials 4 and 6, and forms a transmission line by alternately combining aforementioned members as shown in Fig. 1. Laser beam 1 is emitted onto an object 2, and the scattered light from the object 2 is entered one end of an optical fiber 3 by means of a lens system. The two-dimensional pictorial image or the object 2 is focused as a whole on one end of the optical fiber and transmitted as they are to the other end thereof. As the two-dimensional picture image is subjected to phase fluctuation during transmission through optical fibers, they cannot be reproduced if the two-dimensional pictorial image of the objet 2 emerges out of the other end. In order to compensate such distorted wavefront, a non-linear optical material 4 is disposed immediately after the first optical fiber 3, and pumping light 7 is offered thereon to generate a phase conjugate waves of the distorted wavefront. Then, thus generated phase conjugate wave is transmitted to the second optical fiber 5. At this time, the phase conjugate wave which is fluctuated in phase in the optical fiber 3, is subjected to phase fluctuation identical to the above in the optical fiber 5 having the same phase characteristics as the optical fiber 3 and arrives at the other end of the second optical fiber 5. When thus arrived-light and a pumping light 8 are entered a nonlinear optical material 6 to further generate its phase conjugate wave, phase distortions are compensated for each other and the original two-dimensional pictorial image of the object 2 is recovered. This two-dimensional pictorial image of the object 2 is obtained as the output light from the non-linear optical material 6 of the other end.

As described above, there has been known the method of transmitting two-dimensional pictorial images directly in optical fibers without resolving into picture elements but using phase conjugate waves and of reproducing a picture image without phase distortion at the receiving end. However, this method is detrimental in that two optical fibers of identical characteristics and length should be prepared constantly between the transmission and the receiver sides. Further, the position at which the pumping light 7 is injected should be at the exact center between the two ends. The method therefore is not suitable for communication using an optical fiber transmission line set up between two arbitrary locations.

For details of phase conjugate waves refer to A. Yariv's "Phase Conjugate Optics and Real-time Holography". IEEE Journal Quantum Electron. Vol. QE-14, No. 9. (1978), pp. 650 - 660.

In US-A-4,142,773 there is described a method of transmitting two-dimensional information from an object in which a two-dimensional information signal and a two-dimensional reference signal are produced as interleaved light pulses and transmitted through an optical communication line. After transmission through the line the information signal and the reference signal are synchronised and superimposed so that a hologram record is produced. After the hologram record has been produced it is illuminated by coherent light from an additional source to cause the reproduction of the original two-dimensional information.

An object of the present invention is to overcome at least partially the defect described above and to provide a novel method for transmitting two-dimensional pictorial images as spatial information from one end to the other end of single optical fiber without resolving a two-dimensional pictorial image into picture elements; furthermore, the novel method does not need a large number of optical fiber bundles, nor require plural optical fibers of identical characteristics.

According to the present invention there is provided a pictorial image direct transmission system in which a transmission unit is connected to a receiver unit by means of an optical transmission line which transmits in real time pictorial information from the transmission unit to the receiver unit, the transmission unit comprising an object which provides the pictorial information to be transmitted, a first light source, a divider means which divides the output light from said first light source into two optical paths, a first optical means provided in one of the optical paths which intermittently focuses a two-dimensional pictorial image on an incident end of said transmission line, the two-dimensional pictorial image being obtained by illuminating said object by light from the first light source, and a second optical means provided in the other optical path which intermittently feeds a reference light on the incident end of said optical transmission line while said two-dimensional pictorial image intermittently fed by said first optical means is absent, the reference light being obtained from the output light from said first light source, and said receiver unit comprising a divider means which spatially divides the output signal obtained from said optical transmission line into two optical paths, a signal matching means which synchronizes the arrival time of the output signal derived from the two-dimensional pictorial image with the arrival time of the output signal derived from the reference light by giving a relative delay between said two optical paths, and an image reproduction means which is fed with the signals from said two optical paths which have been synchronized in arrival time by said signal matching means and which reproduces the two-dimensional pictorial image without the phase distortion inflicted on it by propagation along said optical transmission line characterised in that the image reproduction means includes a phase distortion compensation means formed by a non-linear optical material to which at least the synchronised two-dimensional pictorial image and reference signal are applied and from which there is obtained a recovered pictorial signal along a path which is not parallel to either the two-dimensional pictorial image signal or the reference signal.

In an example of the present invention, the two-dimensional pictorial image which is to be transmitted is focussed on one end of the optical transmission line on the transmission side by means of an optical system and the information thereof is transmitted to the other end as it is. The two-dimensional pictorial image is intermittently fed to one end of the transmission line and when the feeding of the two-dimensional pictorial image is interrupted, a reference light obtained from the same light source as that of the two-dimensional pictorial image is fed to the one end of the optical transmission line. On the receiver side, the output signal sent out from the other end of the optical transmission line is divided into two spatially separated light paths, a relative delay is given between said two optical paths, and the delay time is adjusted so as to make the arrival time of said two-dimensional pictorial image coincide with that of said reference light. The two-dimensional pictorial image and the reference signal are simultaneously supplied to a phase distortion compensation means which generates a phase conjugate wave to compensate phase distortion during transmission over the line, thereby recovering a two-dimensional pictorial image of which phase distortion has been compensated.

As the system is constructed so that pulse trains repeating reference signals and pictorial signals periodically are generated on the side of transmission while the output referene signals and the output pictorial signals are adjusted so as to simultaneously enter the phase distortion compensation means, the phase distortion inflicted over the optical transmission line can be compensated at an arbitrary receiving end. Two-dimensional pictorial image information therefore can be directly transmitted between two arbitrary location. As the reference light is constantly transmitted via the optical transmission line, the recovered pictorial signal is less prone to fluctuation caused by external forces such as environmental changes against the transmission line.

[Brief Description of the Drawings]

Fig. 1 is a schematic view of prior art pictorial image transmission system.

Fig. 2 shows the first embodiment of the system according to this invention.

Fig. 3 is an operation time chart to show an optical pulse train on the transmission side of this embodiment.

Fig. 4 is an operational time chart to show an optical pulse train on the receiving side of the embodiment.

Fig. 5 is a view to show an embodiment of the phase distortion compensation means.

Fig. 6 is an explanatory view of the performance of the phase distortion compensation means; Fig. 6(a) is a constructed view while Fig. 6-(b) an explanatory view of vector.

Fig. 7 is a view to show an embodiment of the structure wherein phase distortion compensation is conducted in two stages.

Fig. 8 is a view to show an embodiment of the initial stage of the two-stage compensation method.

Fig. 9 is a view to show the structure of the second embodiment system according to this invention.

Fig. 10 is a time chart to explain operation of the transmission side.

Fig. 11 is a time chart to explain the operation of the receiving side.

Fig. 12 is a view to show the structure of the third embodiment according to this invention.

Fig. 13 is a time chart to explain the operation thereof.

Fig. 14 is a view to show another structural embodiment of the transmission side.

Fig. 15 is a view to show another structural embodiment of the receiving side.

Fig. 16 is a view to show still another structural embodiment of the receiving side.

Fig. 17 is a view to show still another embodiment according to this invention. In the drawings, the reference numeral 1 denotes laser beam, 2 an objects, 3 an optical fiber, 4 a non-linear optical material, 5 an optical fiber, 6 a non-linear optical material, 7, 8 pumping lights, 9 a light source, 10 a light divider means, 13 a lens system, 14 a reflection mirror, 15 an optical delay circuit, 16 an optical coupler, 18 a lens, 19 an optical fiber, 20 a lens, 21 an optical divider means, 24 a reflection mirror, 25 an optical delay circuit, 27 a phase distortion compensation means, 28 a non-linear optical material, 29 optical elements for generating phase conjugate wave, 30 an optical mixer, 32 a non-linear optical material, 33 a hologram plate, 34 a non-linear optical material (crystal of $LiNbO_3$), 41 a laser, 43 a divider element, 44 a delay element, 45 an optical coupler, 47 an optical divider means, 48 a delay element, 49 an optical coupler, 50 a Fabry-Pérot interferometer, 51 a memory-type conjugate wave generating device, 52 an optical coupler, and 54 a phase conjugate wave generator.

[Preferred Embodiment of the Invention]

Fig. 2 shows the structure of an embodiment of this invention using an optical fiber as the transmission line. In Fig. 2 the left side of the optical fiber represents the transmission side while the right side a receiving side.

The light source 9 on the transmission side is an Ar ion laser having a wavelength of 5145 Å. The laser light source 9 is added with a mode locker to generate optical pulse trains of width 1 nSec., the repetition frequency of 82 MHz, and the output optical power of ca. 1W. A half mirror is used as an optical divider 10. The optical divider 10 divides the output light from the light source 9 into a reference light 11 and a pictorial signal light 12. The pictorial signal light 12 is reflected by a reflection mirror 14 to pass an object 2 disposed within lens system 13. The object 2 used is a 35 mm slide. The light which has passed through the object 2 is reflected by an optical coupler 16 comprising a half mirror and is condensed and focused as a two-dimensional pictorial image by a lens 18 on an end of the optical fiber 19. The two-dimensional pictorial image is switched on and of by control of the light source 9, but is not scanned at all. As if the slide were projected on a screen, the two-dimensional pictorial image of the object 2 is condensed and focused as it is. The two-dimensional pictorial image changes with time as the position thereof is changed or the slide is substituted with another slide. In order to simplify the explanation, the signal of the pictorial image is expressed as

As (x, y, t):

wherein As represents a complex amplitude, x and y spatial coordinates, and t time.

A reflection mirror 14 and an optical delay circuit 15 in the optical path of the reference light 11 which has been divided at the optical divider 10 are inserted. The optical delay circuit 15 is used to add a delay of ca. 50 cm in terms of spatial length. If the relative time difference created as above is expressed as $T_0$, the reference light which has passed the delay circuit 15 is expressed as

$Ar(t - T_0)$.

Although the delay circuit 15 is inserted in the side of the reference light, it may be inserted in the side of the two-dimensional pictorial image as the relative time difference alone is important. The reference light 11 which has passed through the optical delay circuit 15 enters the optical fiber 19 via the optical coupler 16 and the lens 18.

The two-dimensional pictorial image and the reference light alternately propagate down the optical fiber 19. The optical fiber 19 is a graded-index multimode optical fiber having a core diameter of 50 $\mu$m and an outer diameter of 120 $\mu$m.

On the receiving side of Fig. 2, the light emerging out of the other end of the optical fiber 19 is collimated by a lens 20. The collimated light enters an optical divider 21 and is separated spatially into two optical paths 22 and 23. In this embodiment, the optical divider 21 is a half mirror. The optical signals of these two optical paths 22 and 23 include pictorial signals and reference light. The optical signal of the optical path 22 is reflected by a reflection mirror 24, is passed through an optical delay circuit 25 to give a prescribed delay, and the output light therefrom 26 is reflected by the reflection mirror 24 and is directed to one of the inputs of a phase distortion compensation means 27. The optical signal from the other optical path 23 is reflected by the reflection mirror 24 and is directed to the other input of the phase distortion compensation means 27. The phase distortion compensation means 27 in this embodiment is constructed with non-linear optical material. The phase distortion compensation means will be described in more detail hereinafter.

Fig. 3 is a time chart to illustrate the behavior in time of the optical pulse trains on the side of transmission. The light source 9 emits the pulse trains of the width $T_2$, repetition time $T_1$ as shown by the numeral 9 in Fig. 3. As aforementioned, however, $T_1 \geq 2T_2$. Three pulse trains are divided by the optical divider 10 or a half mirror into two optical paths or into the reference light 11 and the two-dimensional pictorial image signal light 12 as shown in Fig. 3. The pictorial signal is added to the two-dimensional pictorial signal light 12 and the reference light 11 and the two-dimensional pictorial signal 12 are coupled by an optical coupler 16. The pulse train is obtained, as expressed by a mixed light 17 in Fig. 3, by adjusting the delay time of the light delay circuit 15. The interval $T_0$ herein becomes equal to $T_1/2$.

The optical pulse train in which the two-dimensional pictorial signal light and the reference light are alternately disposed is fluctuated in phase while it propagates through the transmission line of the optical fiber 19. As the output reference light has the phase distortion caused by transmission through the transmission line, the phase thereof is used to compensate the phase distortion of the output pictorial signal light.

Fig. 4 shows the optical pulse train on the side of receiver in the case where the optical divider 21 is a half mirror. When a half mirror is used as the optical divider 21, the optical pulse train becomes the mixture of the output reference light and the output pictorial signal light as illustrated in optical paths 22 and 23 of Fig. 4. The optical signal of the optical path 22 is delayed by the time $T_0$ after passing through the optical delay circuit 25 to become the signal shown in the optical path 26 of Fig. 4. The delay circuit 25 is controlled so that the arrival time of the reference light coincides with that of the two-dimensional pictorial signal light when the delayed light beam 26 and the light beam of the optical path 23 enter the phase distortion compensation means 27. Then, the complex amplitudes of the reference light and the two-dimensional pictorial signal light become Ar (t) and As (x, y: t), respectively, thereby coinciding in relative time. In this manner, it is possible to make the output pictorial signal light and the output reference light enter the phase distortion compensation means 27 at the same time but from different directions.

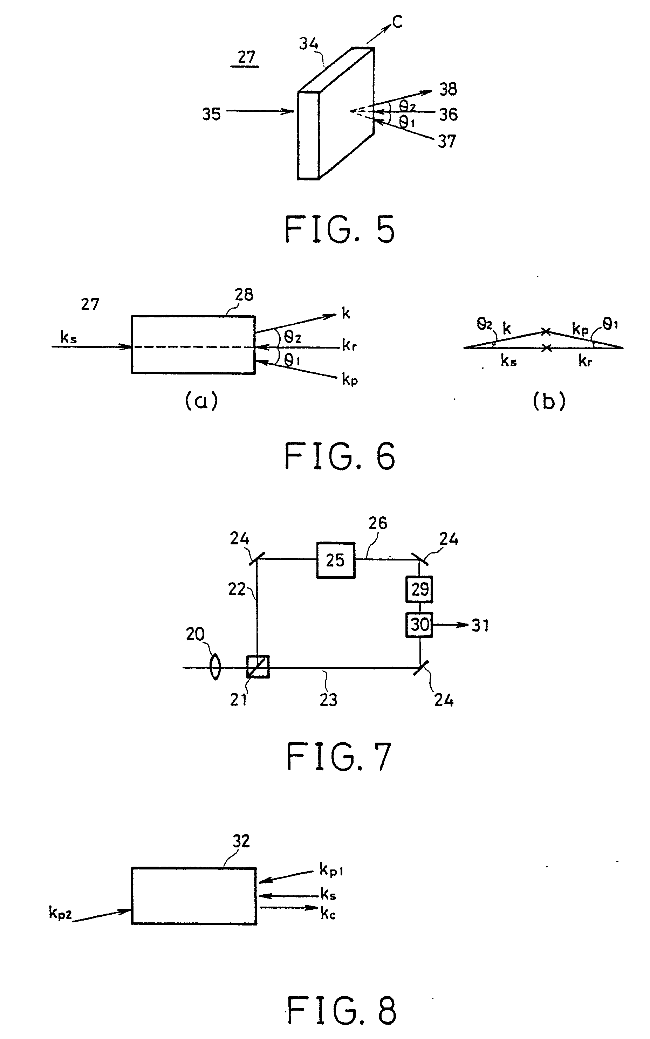

Explanation will now be given to this phase distortion compensation means 27. Fig. 5 shows an embodiment of the phase distortion compensation means which constitutes an important component of this invention and the case where parametric interaction is utilized. The signal light 35 and the reference light 36 are counterpropagated in the same plane as the pumping light 37 and the output light 38. As a pumping light 37, another 5145 Å Ar ion laser 41 of output light power of ca. 1 W is used. This laser 41 generates the pulse with a width of 1 nSec. and repetition frequency of 82 MHz by using a mode locker. It is preferable to maximize the pumping light power in order to increase output light. The crystal of LiNbO$_3$ which is transparent and has a large non-linear optical constant in the above mentioned wavelength is used as a non-linear optical material. For example, if the axis C of the crystal 34 is oriented vertical to the reference light 36 within said ray surface, and if the pumping light 37 is made to enter at the angle $\theta_1 = 11.9°$ with respect to the reference light 36, the recovered pictorial light 38 emerges out from the direction $\theta_2 = 11.5°$ so as to satisfy phase matching conditions. The size of the crystal is ca. 10 x 10 x 3 mm$^3$. The thickness of the crystal which is 3 mm is determined by the length by which non-linear interaction can sufficiently be caused. As the spot size of the laser is several millimeters or less, the above size of the crystal has an aperture sufficient to cause interaction between counterpropagating signal light and reference light. Accordingly, a desired recovered pictorial signal can be emitted from the crystal.

When the light source wavelength varies, the non-linear optical material is to be selected from materials which are transparent and of a larger non-linear optical constant in that particular wavelength. The incident angle $\theta_1$ of the pumping light and the angle $\theta_2$ of the output light will change in correspondence to the orientation of the axis C and the refractive index of the material used. The thickness of the crystal varies in accordance with the magnitude of the non-linear interaction.

Fig. 6 shows an embodiment of the structure of optical wave of the phase distortion compensation means: (a) is a structural view thereof, and (b) an explanatory view of vector. For example, there is shown a structural principle of a system using the parametric interaction where the frequencies $\omega$ of all the four optical waves are identical to each other. This is the principle which enables compensating phase distortion by using only one non-linear optical material 28 (non-linear optical crystals such as $LiNbO_3$, $LiTaO_3$, $Bi_{12}SiO_{20}$(BSO) or liquid such as $CS_2$ or metallic vapor such as Na, etc.). A suffix r is used for the reference light, s for the pictorial signal light and p for the pumping light. The electric fields of each optical wave are expressed as follows:

$$Er = A_r (t)exp [j\{\omega t - \phi (k_r) \cdot k_r \cdot r\}]$$
$$Es = A_s (x, y : t) exp [j\{\omega t - \phi (k_s) - k_s \cdot r\}]$$
$$Ep = A_p exp [j\{\omega t - k_p \cdot r\}] \quad (1)$$

wherein, $A_r$ denotes a complex amplitude of the reference light, $A_s$ a complex amplitude of the output pictorial signal light, $A_p$ an amplitude of the pumping light, t time, $\phi$ phase distortion suffered in the plane vertical to the advancing direction of the light during propagation on the path, k a wave vector, and r positional vector.

When these optical waves parametrically interact within the non-linear optical material 28, the frequency of output light may be ( $\omega \pm \omega \pm \omega$ ) out of which the frequency of the terms where the output light frequency becomes equal to $\omega$ is extracted as below:

$$E \propto E_s \cdot E_r^* \cdot E_p + c.c. = A_s A_r^* A_p exp [j\{\omega t - (k_s - k_r + k_p) r + \phi (k_r) - \phi (k_s)\}] \quad (2)$$

wherein * denotes complex conjugate. The above equation (2) obviously shows that the directions of incident reference light and the two-dimensional pictorial signal onto the non-linear optical material 28 should coincide with each other in order to completely compensate the phase distortion $\phi (k_s)$ of the two-dimensional pictorial image and the phase distortion $\phi (k_r)$ of the referene light. If the equation below holds,

$$E = A exp [j (\omega t - k \cdot r)],$$

the output light will exit in the direction of

$$k = k_s - k_r + k_p.$$

This is the condition for phase matching. The vector of Fig. 6(b) shows the example of the structure of an optical system which satisfies the above two conditions.

Due to such structure, the phase distortion $\phi - (k_s)$ of the output pictorial signal light can be compensated for the phase $\phi (k_r)$ of output reference light and thus recovered signal E, which is not distorted in phase and is proportionate to the input two-dimensional pictorial signal $A_s$, will be obtained from the direction of k vector shown in Fig. 6. As parametric interaction takes place in this element, the pictorial signal is amplified by the pumping light.

The above phase distortion compensation means 27 may be constructed by a two-stage method which compensates phase distortion after the phase conjugate wave is generated.

Fig. 7 shows another example of the structure of the receiving side when the phase distortion compensation is conducted in two stages. In this structure phase distortion compensation means 27 comprises an optical mixing element 30 and an optical element 29 composed of non-linear optical material for phase conjugate wave generation. The phase distortion $\phi (k_r)$ of the light coming from one direction, for instance the output reference light, is inverted to become $-\phi (k_r)$ by using an optical element 29 for phase conjugate wave generation. When the output pictorial signal light having the phase distortion $\phi (k_s)$ is entered the optical mixer 30 together with the above, an output proportionate to the products of the electric fields of both light is obtained; accordingly $\phi (k_s)$ and $-\phi (k_r)$ are cancelled. Therefore, a recovered pictorial signal 31 which has been compensated in phase will be obtained from the optical mixer 30. If an element for generating the second harmonics is used as the optical mixer 30, the signal obtained from the recovered pictorial signal 31 comes to have one half wavelength of the original wavelength.

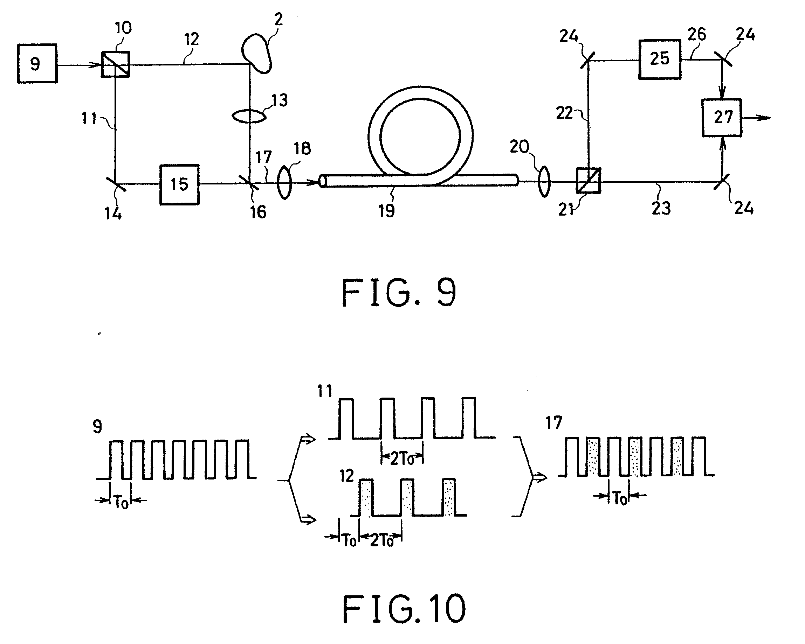

Taking the example of the optical element 29 for generating phase conjugate waves, one using four wave mixing will be described. As shown in Fig. 8, a non-linear optical material 32 is used. $k_{p1}$, $k_{p2}$ both denote pumping light. When a pictorial signal light $k_s$ is entered, a light $k_c$ conjugate in phase to the pictorial signal light is emitted in the direction opposite to $k_s$. $k_{p1}$ and $k_{p2}$ are to be injected from directions opposed to each other. The frequencies $\omega$ of all the optical waves are identical.

Another embodiment of this invention will be described. Fig. 9 shows its structure. In this case, a gate circuit which alternately divides the output light from the light source 9 and offers the same to optical paths 11 and 12 is used as the optical divider 10. The object 2 used is of a reflection type. The scattered light therefrom is converged with lenses 13 and 18 and focussed on one end of the optical fiber 19.

In the optical divider 21 of the receiving side, the half mirror is replaced by a gate synchronous to received pulses.

Fig. 10 is a time chart for explaining operation of the receiving side. Pulse waves are emitted from the light source 9. The pulse interval is $T_0$. The pulse wave is divided by the optical divider 10 into two optical paths to obtain optical pulses in which the reference light 11 and the two-dimensional pictorial signal light 12 are repeated at the time interval of $2T_0$ respectively. The pictorial signal light 12 is added with the two-dimensional pictorial information As (x, y; t) at an intermediate point. Subsequently, when the reference light 11 and the pictorial signal light 12 are mixed by the optical coupler 16, the times thereof are relatively delayed by $T_0$ - (reference numeral 17 of Fig. 10) by adjusting the length of optical path in the optical delay circuit 15. The reference light is expressed herein as Ar (t - $T_0$). After two optical waves are mixed, the reference light 11 and the pictorial signal light 12 are alternately repeated in the optical pulse train (a mixed light 17) and entered the optical fiber 19.

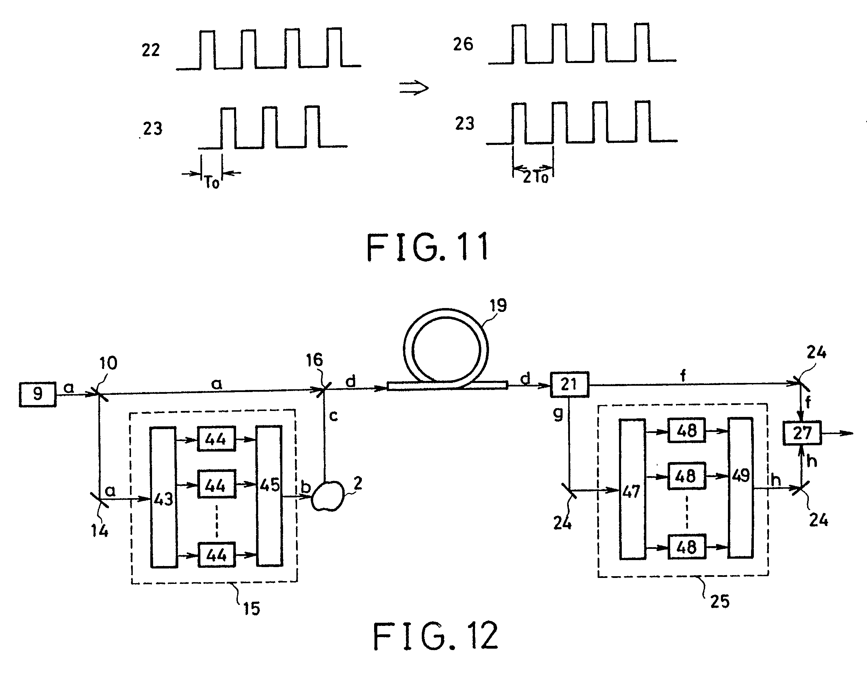

Fig. 11 is a time chart for explaining operation on the receiving side. In this case, the reference light and the pictorial signal light appear independently on the two optical paths 22 and 23 which are divided by the optical divider 21. The optical signal of the path 26 is relatively delayed by passing through the optical delay circuit 25 and the optical signals from the two optical paths 23 and 26 enter the phase distortion compensation means 27 at the same time.

This invention can also be realized in the manner above so that pictorial signals can be transmitted and recovered on the receiving side.

It is preferable to use an ultrasonic deflector as the gate in the optical divider. A reflection mirror of direction-variable-type may be used, although it needs time for switching.

Besides those mentioned above, Nd: YAG laser, semiconductor laser, etc. may be used as the light source which emits pulsed light.

Although a light source which emits pulsed light is used as the light source 9 in the above embodiment, it may be continuous-wave light such as Ar ion and Kr ion lasers. In the latter case, the optical dividers 10 and 21 may be constructed with gates. The time chart of the operation on both transmission and receiving sides, however, is identical to Figs. 10 and 11.

Fig. 12, shows the structure of the third embodiment of this invention. This embodiment improves the transmission efficiency of the two dimensional pictorial information by transmitting the reference light once every n time (n is a plural number) transmission of the two dimensional pictorial information.

On the side of transmission or the left side of Fig. 12, the output light from the light source 9 is divided into two by the optical divider 10, one of which is emitted onto the object 2 via an optical delay circuit 15 and the scattered light therefrom is injected into the optical coupler 16. The optical signal of the other path enters the optical coupler 16 and the mixed optical signal enters one end of the optical fiber 19. On the receiving side, it is divided into two optical paths by the optical divider 21 and one of them enters the phase distortion compensation means 27 via the reflection mirror 24. The other divided optical path enters the phase distortion compensation means 27 via the optical delay circuit 25 and the reflection mirror 24.

This embodiment differs from above mentioned embodiments in the optical delay circuit 15 of the transmission side and the optical delay circuit 25 on the receiving side. Other components are similar to the above embodiments. It should be noted that the optical delay circuit 15 on the transmission side delays the optical signal which emits the object 2 while the circuit 25 on the receiving side delays the reference light.

The optical delay circuit 15 on the transmission side includes a divider element 43 which divides input optical signal into optical paths in the number of n, delay elements 44 which are interposed in respective optical paths divided by said divider element 43 in the number n and give different delay thereto, and a coupler 45 which couples optical signals which have passed these delay elements 44. The optical delay circuit 25 of the receiving side includes a divider element 47 which divides input optical signal into optical paths in the number n, delay elements 48 which are interposed in the optical paths divided by said divider element 47 and give different delays thereto, and a coupler 49 which couples the optical signals which have passed the delay elements 48.

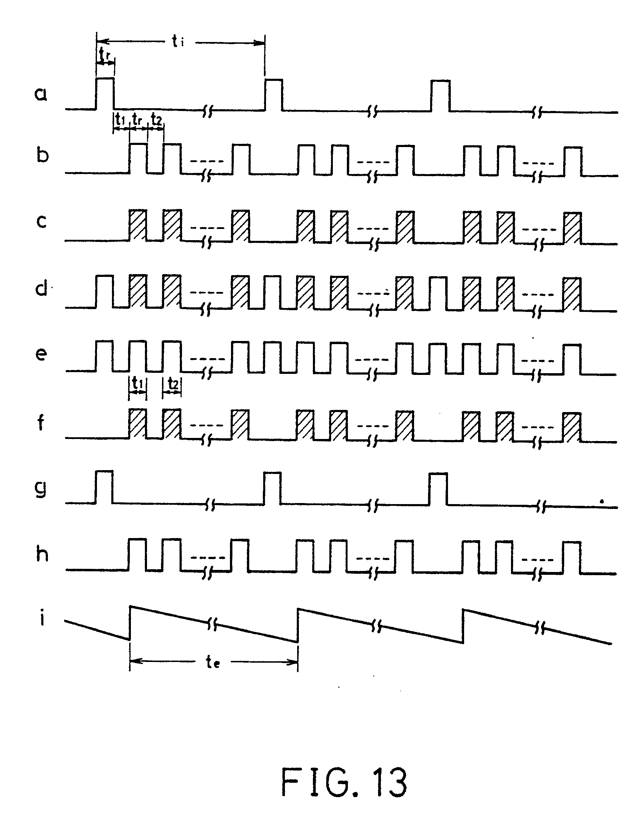

Fig. 13 is a time chart of the operation of the third embodiment of this invention wherein the symbols a through h denote the signal waveforms at the points marked by a through h of Fig. 12. The light source 9 generates optical pulses of width $t_r$ at the period $t_i$. This becomes the reference light for the optical signal d on the incident end of the optical fiber 19. The optical signal of the light source 9 is divided to enter the optical delay circuit 15 and generates optical pulses whose number is a plurality n and which are delayed with respect to the optical pulses from the light source 9, as shown in Fig. 13(b). They are emitted on the subject 2 and become the signals including the two-dimensional pictorial information. They are coupled by the optical coupler 16 and injected into the optical fiber 19 as the signal shown in Fig. 13(d).

Although a lens system is inserted in the path of the optical signals C, it is omitted in Fig. 12 for simplicity. The structure thereof is similar to aforementioned embodiments which focuses the picture image of the object 2 on an end of the optical fiber 19 as it is. The pictorial image is focused on the end of the optical fiber 19 in the form of a two-dimensional pictorial image of the objects as if it were seen with human eyes, without being divided into picture elements nor scanned.

The optical signals propagated through the optical fiber 19 are divided by the optical divider 21 on the receiver side. The optical divider 21 is a gate circuit which is synchronized with the optical pulses propagating through the optical fiber 19. The continuous optical signals in the number $n$ including the two-dimensional pictorial information are directed to an optical path f while the reference light which appears at the $(n + 1)$th time is directed to the optical delay circuit 25 via an optical path g. The optical delay circuit 25 gives different delays in the number $n$ to the reference light to obtain the optical signals shown in Fig. 13(h). Delay times of these signals are adjusted so that the arrival time of them agree with that of the optical signals including the two-dimensional pictorial information shown in Fig. 13(f). Therefore, the optical signals f and h enter the phase distortion compensation means 27 simultaneously and the phase distortion is compensated by the effect similar to the above mentioned to recover the two-dimensional pictorial image of the object 2 on the transmission side.

The structure of this embodiment is advantageous in that the percentage of the reference light which propagates through the transmission line is small, thereby enhancing the efficiency of pictorial image information transmission of the line.

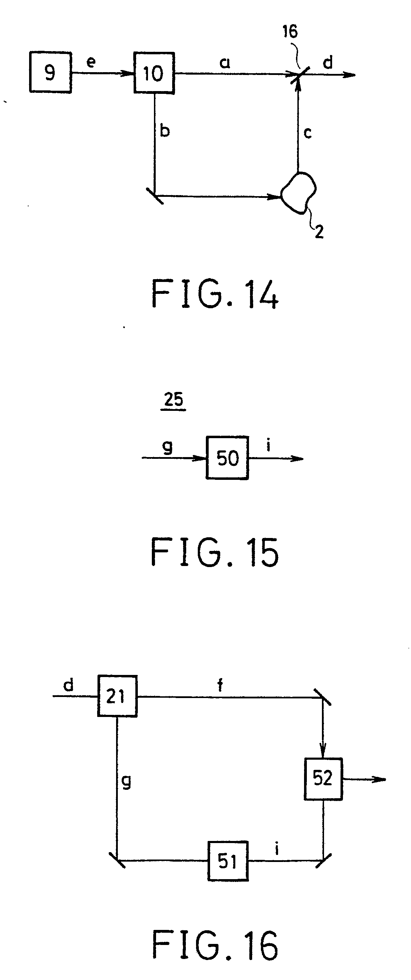

Fig. 14 shows another embodiment of the structure of the transmission side. All structures other than the transmission side are similar to the above mentioned third embodiment. In this embodiment, the transmission side is not provided with an optical delay circuit but is constructed to generate signals including the two-dimensional pictorial information by irradiating light on the object 2 for n times every reference pulse. The light source 9 generates optical pulses shown in Fig. 13(e). This waveform can be obtained by pulsed oscillation laser, by direct modulation of laser light, or by external modulation of a continuous wave oscillation laser. Said optical pulses are divided into the reference light a and the optical pulse b for irradiating the object 2 by an optical divider 10 which comprises gate circuits. The light scattered from the object 2 is condensed via a lens system (not shown), and are coupled by the optical coupler 16 as the optical signals shown in Fig. 13(c). Fig. 13-(d) shows mixed optical signals which can be used to recover on the receiving side in a manner similar to said third embodiment.

Fig. 15 shows another embodiment on the receiving side wherein a phase memory is used to extract the phase information of the reference light. The receiving side is not provided with delay elements in the number of $n$ with different delay times, but is provided with only one Fabry-Pérot interferometer 50 as the optical delay circuit 25 to achieve the same effect. The Fabry-Pérot interferometer has a storage function which makes a signal inputted as shown in Fig. 13(g) to attenuate when outputted as shown in Fig. 13(i). The attenuation characteristic is determined by the value Q of the interferometer. The phase distortion can be compensated by making the attenuation time $t_e$ almost identical to the repetition time $t_i$ of the reference light so that the attenuating signal i may overlap sufficiently the signal shown in Fig. 13(f).

The phase memory device may be provided in the optical path of the referene light on the receiver side. In the case that the phase distortion compensation means 27 is divided into a phase conjugate wave generator and a mixer, it may be inserted therebetween.

Figure 16 shows still another embodiment wherein a memory type conjugate wave generator 51 is used as the phase memory on the receiving side and the phase distortion compensation means 27 is replaced by a simple coupler 52. Such memory type conjugate wave generator can generate conjugate waves and, if it comprises semiconductors or dyes, can retain phase information for at least several nanoseconds. Therefore, the output waveforms from the memory type conjugate wave generator 51 becomes the light which attenuates in the time $t_e$ as shown in Fig. 13(i) and the output light therof becomes the phase conjugate wave of the reference light. The recovered pictorial signals can be obtained in the coupled output light by coupling above-mentioned reference light with the optical signals including the two-dimensional pictorial information so as to compensate the phase distortion suffered during the propagation through the optical fiber 19.

## Claims

1. A pictorial image direct transmission system in which a transmission unit is connected to a receiver unit by means of an optical transmission line (19) which transmits in real time pictorial information from the transmission unit to the receiver unit, the transmission unit comprising an object (2) which provides the pictorial information to be transmitted, a first light source (9), a divider means (10) which divides the output light from said first light source into two optical paths (11,12), a first optical means (13,14,16) provided in one of the optical paths (12) which intermittently focuses a two-dimensional pictorial image on an incident end of said transmission line, the two-dimensional pictorial image being obtained by illuminating said object (2) by light from the first light source (9), and a second optical means (14,15) provided in the other optical path (11) which intermittently feeds a reference light on the incident end of said optical transmission line (19) while said two-dimensional pictorial image intermittently fed by said first optical means (12) is absent, the reference light being obtained from the output light from said first light source, and said receiver unit comprising a divider means (21) which spatially divides the output signal obtained from said optical transmission line (19) into two optical paths (22,23), a signal matching means (25) which synchronizes the arrival time of the output signal derived from the two-dimensional pictorial image with the arrival time of the output signal derived from the reference light by giving a relative delay between said two optical paths, and an image reproduction means (27,41) which is fed with the signals from said two optical paths (22,23) which have been synchronized in arrival time by said signal matching means and which reproduces the two-dimensional pictorial image without the phase distortion inflicted on it by propagation along said optical transmission line characterised in that the image reproduction means (27,41) includes a phase distortion compensation means formed by a non-linear optical material to which at least the synchronised two-dimensional pictorial image and reference signal are applied and from which there is obtained a recovered pictorial signal along a path which is not parallel to either the two-dimensional pictorial image signal or the reference signal.

2.  The pictorial image direct transmission system as claimed in claim 1 which is further characterized in that the divider means (10) and the first and the second optical means (13,14 and 14,15) provided in the transmission unit are structured so as to supply alternately the two-dimensional pictorial image and the reference light to the incident end of the optical transmission line, and that the signal matching means (25) provided in the receiver unit includes a means which imposes on at least one of the output signals derived from the two-dimensional pictorial image and the reference light emerging from the optical transmission line a delay to make them coincide.

3.  The pictorial image direct transmission system as claimed in claim 1 which is further characterized in that the divider means (10) and the first and the second optical means (13,14 and 14,15) provided in the transmission unit are structured (Fig.12) so as to feed the reference light once every plural number n of the two-dimensional pictorial images and that the signal matching means (25) is provided with a means (47,48,49) which gives delays to the reference light emerging from the optical transmission line so that the reference light coincides with each of the corresponding n two-dimensional pictorial images emerging from the optical transmission line.

4.  The pictorial image direct transmission system as claimed in claim 1 characterised in that the optical transmission line (19) is a multi-mode optical fibre.

5.  The pictorial image direct transmission system as claimed in claim 1 characterised in that the object (2) is a substance which allows the light from the first light source to transmit therethrough.

6.  The pictorial image direct transmission system as claimed in claim 1 characterised in that the object (2) is a substance which reflects the light from the first light source.

7.  The pictorial image direct transmission system as claimed in claim 1 characterised in that the first light source (9) is a light source which provides pulsed light, the duration of the light pulses is equal to or less than one half of their repetition time, the divider means (10) in the transmission unit includes a means which simultaneously divides the output light from the first light source continuously into two optical paths (11,12), and at least one of the first optical means and the second optical means is provided with a means (15) which delays the light passing therethrough.

8.  The pictorial image direct transmission system as claimed in claim 1 characterised in that the first light source (9) emits pulsed light, the divider means (10) in the transmission unit includes a means which selects light pulses from said first light source and directs them into one of the two optical paths.

9.  The pictorial image direct transmission system as claimed in claim 1 characterised in that the first light source (9) emits continuous light, and the divider means (10) in the transmission unit includes a means which selects in a sequence of time instants the output light from said first light source and directs the selected light into one of the two optical paths.

10. The pictorial image direct transmission system as claimed in claim 1 characterised in that the divider means (21) in the receiver unit includes a gate means (Fig.9) which directs the output signal from the optical transmission line into one of the two optical paths (22,23) synchronously with the received pulsed light and the signal matching means (25) in the receiver unit includes an optical delay circuit which is inserted into one of said two optical paths.

11. The pictorial image direct transmission system as claimed in claim 1 characterised in that the divider means (21) in the receiver unit includes a means which divides the output signals from the optical transmission line into two optical paths (22,23) and the signal matching means (25) in the receiver unit includes an optical delay circuit which is inserted into at least one of said two paths.

12. The pictorial image direct transmission system as claimed in claim 1 characterised in that the phase distortion compensation means (27,41) includes another light source having a wavelength almost equal to the wavelength of the first light source (9) and a means (27, Fig.5) made of non-linear optical material in which phase distortion is compensated by means of parametric interaction of the output light from said other light source and the light outputs from both of the two optical paths (22,23) simultaneously.

13. The pictorial image direct transmission system as claimed in claim 1 characterised in that the phase distortion compensation means (27,41) includes another light source (41) having a wavelength almost equal to the wavelength of the first light source, non-linear optical material (29) in which a phase conjugate wave to one of the two signal waves from the optical output paths is generated by injecting the output light from said other light source (41) and the one signal wave, and a means (30) which secondly mixes the other of the said two signal waves and said phase conjugate wave from said non-linear optical material.

14. The pictorial image direct transmission system as claimed in claim 13 characterised in that the phase distortion compensation means includes a means (Fig.8) for generating four wave mixing.

15. The pictorial image direct transmission system as claimed in claim 7 or 8 characterised in that the first light source (9) is a pulsed-oscillation light source of a direct modulation type.

16. The pictorial image direct transmission system as claimed in claim 7 or 8 characterised in that the first light source (9) emits pulsed light by modulating continuous light from the source.

17. The pictorial image direct transmission system as claimed in claim 3 characterised in that the first light source (9) generates pulsed light, the first optical means (14,15) in the transmission unit includes a means which takes $n$ successive light pulses from the pulsed light emitted by said first light source, and the second optical means (13,14) in the transmission unit includes a means which takes one light pulse subsequent to said $n$ light pulses from the pulsed light emitted by said first light source.

18. The pictorial image direct transmission system as claimed in claim 3 characterised in that the first light source (9) generates pulsed light, the output pulsed light from said first light source has a repetition time which is $n + 1$ times the pulse width or more, and the first optical means includes a means (43,44,45) which provides $n$ different time delays which are shorter than said repetition time for a single light pulse emitted from the first light source.

19. The pictorial image direct transmission system as claimed in claim 3 characterised in that the means for providing delays in the receiver unit includes a means (47,48,49) which provides delays of $n$ different lengths.

20. The pictorial image direct transmission system as claimed in claim 3 characterised in that the means (50) providing the delay in the receiver unit includes a means which continuously delays for the period during which $n$ two-dimensional pictorial images are being obtained from the output of the optical transmission line.

21. The pictorial image direct transmission system as claimed in claim 20 characterised in that the means of continuously delaying is a Fabry-Perot interferometer (50).

## Revendications

1. Un système de transmission directe d'images illustrées dans lequel un ensemble de transmission est relié à un ensemble récepteur au moyen d'une ligne (19) de transmission optique qui transmet en temps réel une information illustrée depuis l'ensemble de transmission jusqu'à l'ensemble récepteur, l'ensemble de transmission comprenant un objet (2) qui fournit l'information illustrée à transmettre, une première source lumineuse (9), un moyen diviseur (10) qui divise la lumière de sortie provenant de ladite source lumineuse en deux trajets optiques (11, 12), un premier moyen optique (13, 14, 16) disposé dans l'un des trajets optiques (12) qui focalise de façon intermittente une image illustrée en deux dimensions sur une extrémité incidente de ladite ligne de transmission, l'image illustrée en deux dimensions étant obtenue en éclairant ledit objet (2) par une lumière provenant de la première source lumineuse (9), et un deuxième moyen optique (14, 15) disposé dans l'autre trajet optique (11) qui envoie de façon intermittente une lumière de référence sur l'extrémité incidente de ladite ligne (19) de transmission optique pendant que ladite image illustrée en deux dimensions amenée de façon intermittente par ledit premier moyen optique (12) est absente, la lumière de référence étant obtenue à partir de la lumière produite à partir de ladite première source lumineuse, et ledit ensemble récepteur comprenant un moyen diviseur (21) qui divise spatialement le signal de sortie obtenu à partir de ladite ligne (19) de transmission optique en deux trajets optiques (22, 23), un moyen (25) d'accord de signaux qui synchronise le temps d'arrivée du signal de sortie dérivé de l'image illustrée en deux dimensions avec le temps d'arrivée du signal de sortie dérivé de la lumière de référence en donnant un retard relatif entre lesdits deux trajets optiques, et un moyen (27, 41) de reproduction d'images qui reçoit les signaux provenant desdits deux trajets optiques (22, 23) qui ont été synchronisés en temps d'arrivée par ledit moyen d'accord de signaux et qui reproduit l'image illustrée en deux dimensions sans la distorsion de phase qui lui est infligée par une propagation le long de ladite ligne de transmission otique caractérisé en ce que le moyen (27, 41) de reproduction d'images comprend un moyen de compensation de distorsion de phase formé par une matière optique non linéaire à laquelle au moins l'image illustrée en deux dimensions et le signal de référence synchronisés sont appliqués et à partir duquel est obtenu un signal illustré récupéré le long d'un trajet qui n'est parallèle ni au signal d'image illustrée en deux dimensions ni au signal de référence.

2. Le système de transmission directe d'images illustrées selon la revendication 1 qui est caractérisé en outre en ce que le moyen diviseur (10) et le premier et le deuxième moyens optiques (13, 14 et 14, 15) disposés dans l'ensemble de transmission sont structurés de façon à amener en alternance l'image illustrée en deux dimensions et la lumière de référence à l'extrémité incidente de la ligne de transmission optique et en ce que le moyen (25) d'accord de signaux disposé dans l'ensemble récepteur comprend un moyen qui impose, sur au moins l'un des signaux de sortie dérivés de l'image illustrée en deux dimensions et de la lumière de référence émergeant de la ligne de transmission optique, un retard pour les amener à coïncider.

3. Le système de transmission directe d'images illustrées selon la revendication 1 qui est caractérisé en outre en ce que le moyen diviseur (10) et le premier et le deuxième moyens optiques (13, 14 et 14,15) disposés dans l'ensemble de transmission sont structurés (Fig. 12) de façon à amener la lumière de référence une fois pour chaque nombre pluriel n des images illustrées en deux dimensions et en ce que le moyen (25) d'accord de signaux comporte un moyen (47, 48, 49) qui donne des retards à la lumière de référence émergeant de la ligne de transmission optique de façon que la lumière de référence coïncide avec chacune des n images illustrées correspondantes en deux dimensions émergeant de la ligne de transmission optique.

4. Le système de transmission directe d'images illustrées selon la revendication 1 caractérisé en ce que la ligne (19) de transmission optique est une fibre optique multimode.

5. Le système de transmission directe d'images illustrées selon la revendication 1 caractérisé en ce que l'objet (2) est une substance qui permet à la lumière provenant de la première source d'être transmise à travers elle.

6. Le système de transmission directe d'images illustrées selon la revendication 1 caractérisé en ce que l'objet (2) est une substance qui réfléchit la lumière provenant de la première source lumineuse.

7. Le système de transmission directe d'images illustrées selon la revendication 1 caractérisé en ce que la première source lumineuse (9) est une source lumineuse qui fournit une lumière pulsée, la durée des impulsions lumineuses est égale ou inférieure à une moitié de leur temps de répétition, le moyen diviseur (10) de l'ensemble de transmission comprend un moyen qui divise simultanément la lumière de sortie provenant de la première source lumineuse de façon continue en deux trajets optiques (11, 12), et au moins l'un des moyens parmi le premier moyen optique et le deuxième moyen optique comporte un moyen (15) qui retarde la lumière qui le traverse.

8. Le système de transmission directe d'images illustrées selon la revendication 1 caractérisé en ce que la première source lumineuse (9) émet une lumière pulsée, le moyen diviseur (10) de l'ensemble de transmission comprend un moyen qui choisit des impulsions lumineuses provenant de la première source lumineuse et les dirige vers l'un des deux trajets optiques.

9. Le système de transmission directe d'images illustrées selon la revendication 1 caractérisé en ce que la première source lumineuse (9) émet une lumière continue, et le moyen diviseur (10) de l'ensemble de transmission comprend un moyen qui choisit dans une séquence d'instants de temps la lumière de sortie provenant de ladite première source lumineuse et dirige la lumière choisie vers l'un des deux trajets optiques.

10. Le système de transmission directe d'images illustrées selon la revendication 1 caractérisé en ce que le moyen diviseur (21) de l'ensemble récepteur comprend un moyen de grille (Fig. 9) qui dirige le signal de sortie provenant de la ligne de transmission optique vers l'un des deux trajets optiques (22, 23) de manière synchrone avec la lumière pulsée reçue et le moyen (25) d'accord de signaux de l'ensemble récepteur comprend un circuit optique à retard qui est inséré dans l'un des deux trajets optiques.

11. Le système de transmission directe d'images illustrées selon la revendication 1 caractérisé en ce que le moyen diviseur (21) de l'ensemble récepteur comprend un moyen qui divise les signaux de sortie provenant de la ligne de transmission optique en deux trajets optiques (22, 23) et le moyen (25) d'accord de signaux de l'ensemble récepteur comprend un circuit optique de retard qui est inséré dans au moins l'un desdits deux trajets.

12. Le système de transmission directe d'images illustrées selon la revendication 1 caractérisé en ce que le moyen (27, 41) de compensation de distorsion de phase comprend une autre source lumineuse dont la longueur d'onde est presque égale à la longueur d'onde de la première source lumineuse (9) et un moyen (27, Fig. 5) constitué d'une matière optique non linéaire dans laquelle la distorsion de phase est compensée au moyen d'une interaction paramétrique de la lumière de sortie provenant de ladite autre source lumineuse et les sorties de lumière provenant des deux trajets optiques (22, 23), de façon simultanée.

13. Le système de transmission directe d'images illustrées selon la revendication 1 caractérisé en ce que le moyen (27, 41) de compensation de distorsion de phase comprend une autre source lumineuse (41) dont la longueur d'onde est presque égale à la longueur d'onde de la première source lumineuse, une matière optique non linéaire (29) dans laquelle une onde conjuguée en phase avec l'une des deux ondes de signaux provenant des trajets de sortie optique est engendrée en injectant la lumière de sortie provenant de ladite autre source lumineuse (41) et la première onde de signal, et un moyen (30) qui mélange en deuxième lieu l'autre desdites deux ondes de signaux et ladite onde conjuguée en phase provenant de ladite matière optique non linéaire.

14. Le système de transmission directe d'images illustrées selon la revendication 13 caractérisé en ce que le moyen de compensation de distorsion de phase comprend un moyen (Fig. 8) pour engendrer un mélange de quatre ondes.

15. Le système de transmission directe d'images illustrées selon la revendication 7 ou 8 caractérisé en ce que la première source lumineuse (9) est une source lumineuse à oscillations pulsées d'un type de modulation directe.

16. Le système de transmission directe d'images illustrées selon la revendication 7 ou 8 caractérisé en ce que la première source lumineuse (9) émet une lumière pulsée en modulant une lumière continue provenant de la source.

17. Le système de transmission directe d'images illustrées selon la revendication 3 caractérisé en ce que la première source lumineuse (9) engendre une lumière pulsée, le premier moyen optique (14, 15) de l'ensemble de transmission comprend un moyen qui prend $n$ impulsions lumineuses successives provenant de la lumière pulsée émise par ladite première source lumineuse, et le deuxième moyen optique (13, 14) de l'ensemble de transmission comprend un moyen qui prend une impulsion lumineuse qui suit lesdites $n$ impulsions lumineuses provenant de la lumière pulsée émise par ladite première source lumineuse.

18. Le système de transmission directe d'images illustrées selon la revendication 3 caractérisé en ce que la première source lumineuse (9) engendre une lumière pulsée, la lumière pulsée de sortie provenant de ladite première source lumineuse possède un temps de répétition qui est n + 1 fois la largeur d'impulsions ou davantage, et le premier moyen optique comprend un moyen (43, 44, 45) qui fournit n retards de temps différents qui sont plus courts que ledit temps de répétition pour une impulsion lumineuse unique émise depuis la première source lumineuse.

19. Le système de transmission directe d'images illustrées selon la revendication 3 caractérisé en ce que le moyen de réaliser des retards dans l'ensemble récepteur comprend un moyen (47, 48, 49) qui fournit des retards de n longueurs différentes.

20. Le système de transmission directe d'images illustrées selon la revendication 3 caractérisé en ce que le moyen (50) fournissant le retard dans l'ensemble récepteur comprend un moyen qui retarde de façon continue pendant la période pendant laquelle n images illustrées à deux dimensions sont en cours d'obtention depuis la sortie de la ligne de transmission optique.

21. Le système de transmission directe d'images illustrées selon la revendication 20 caractérisé en ce que le moyen destiné à retarder de façon continue est un interféromètre de Fabry-Pérot (50).

**Patentansprüche**

1. Direktes Übertragungssystem von Bildern, in welchen eine Übertragungseinheit mit einer Empfangseinheit über eine optische Übertragungsstrecke (19), welche Bildinformation von der Übertragungseinheit zur Empfangseinheit in Echtzeit überträgt, verbunden ist, wobei die Übertragungseinheit ein Objekt (2) umfaßt, welches die zu übertragende Bildinformation liefert; eine erste Lichtquelle (9); ein Teilermittel (10), welches das Licht am Ausgang der ersten Lichtquelle auf zwei optische Wege (11, 12) aufteilt; erste optische Mittel (13,14, 16), die in einem der optischen Wege (12) vorgesehen sind, welche ein zweidimensionales Bild, das durch Beleuchtung des Objekts (2) durch Licht aus der Lichtquelle (9) erhalten wird, intermittierend auf ein Auftreff-Ende dieser optischen Übertragungsstrecke (19) fokussieren; und zwei optische Mittel (14,15), die in dem anderen optischen Weg (11) vorgesehen sind, welche dem Auftreff-Ende dieser optischen Übertragungsstrecke (19) intermittierend ein Referenzlicht zuleiten, und zwar während der Zeit, in welcher das zweidimensionale Bild, das vom ersten optischen Mittel (12) intermittierend zugeleitet wird, abwesend ist, wobei das Referenzlicht vom Ausgangslicht der ersten Lichtquelle erhalten wird; und wobei die Empfangseinheit ein Teilermittel (21) umfaßt, welches das Ausgangssignal, das von der optischen Übertragungsstrecke (19) erhalten wird, in zwei optische Wege (22,23) räumlich aufteilt; ein Signalanpassungsmittel (25), das die Ankunftszeit des Ausgangssignals des zweidimensionalen Bildes mit der Ankunftszeit des Ausgangssignals des Referenzlichts durch Einstellen einer relativen Verzögerung zwischen diesen beiden optischen Wegen synchronisiert; und ein Bildreproduktionsmittel (27,41), welches mit den Signalen der zwei optischen Wege (22,23), deren Ankunftszeit über das Signalanpassungsmittel synchronisiert wurde, gespeist wird und welches das zweidimensionale Bild ohne Phasenverzerrung, die durch die Ausbreitung über die optsche Übertragungsstrecke zugefügt wurde, reproduziert, **dadurch gekennzeichnet,** daß die Bildreproduktionsmittel (27,41) ein Phasenverzerrungs-Kompensationsmittel enthalten, welches aus nichtlinearem optischem Material gebildet wird, das zumindest mit dem synchronisierten zweidimensionalen Bild und dem Referenzsignal beaufschlagt ist und von welchem ein zurückgewonnenes Bildsignal erhalten wird, entlang eines Weges, der weder parallel ist zum zweidimensionalen Bildsignal, noch zum Referenzsignal.

2. Direktes Übertragungssystem von Bildern nach Anspruch 1, dadurch gekennzeichnet, daß das Teilermittel (10) und das erste und zweite optische Mittel (13,14 und 14,15), die in der Übertragungseinheit vorgesehen sind, derartig strukturiert sind, daß sie das Auftreff-Ende der optischen Übertragungsstrecke alternativ mit dem zweidimensionalen Bild und dem Referenzlicht speisen, und daß das Signalanpassungsmittel (25), das in der Empfangseinheit vorgesehen ist, Mittel enthält, die zumindest einem der Ausgangssignale, hergeleitet vom zweidimensionalen Bild und vom Referenzlicht, die aus der optischen Übertragungsstrecke austreten, eine Verzögerung auferlegt, um sie koinzident zu machen.

3. Direktes Übertragungssystem von Bildern nach Anspruch 1, dadurch gekennzeichnet, daß das Teilermittel (10) und das erste und zweite optische Mittel (13,14 und 14,15), die in der Übertragungseinheit vorgesehen sind, derartig strukturiert sind, daß sie das Referenzlicht einmal pro Mehrzahl n des zweidimensionalen Bildes einspeisen, und daß das Signalanpassungsmittel (25) mit einem Mittel (47,48, 49) versehen ist, welches dem aus der optischen Übertragungsstrecke austretenden Referenzlicht Verzögerungen verleiht derart, daß das Referenzlicht mit jedem der aus der optischen Übertragungsstrecke austretenden zugehörigen n zweidimensionalen Bilder in Koinzidenz gebracht werden kann.

4. Übetragungssystem von Bildern nach Anspruch 1, dadurch gekennzeichnet, daß die optische Übertragungsstrecke (19) eine optische Mehrmodus-Faser ist.

5. Direktes Übertragungssystem von Bildern nach Anspruch 1, dadurch gekennzeichnet, daß das Objekt (2) aus einer Substanz besteht, welche die Transmission des Lichts hindurch von der ersten Lichtquelle aus gestattet.

6. Direktes Übertragungssystem von Bildern nach Anspruch 1, dadurch gekennzeichnet, daß das Objekt (2) aus einer Substanz besteht, welche das Licht von der ersten Lichtquelle reflektiert.

7. Direktes Übertragungssystem von Bildern nach Anspruch 1, dadurch gekennzeichnet, daß die erste Lichtquelle (9) eine Lichtquelle ist, welche gepulstes Licht erzeugt, wobei die Zeitdauer der Lichtimpulse gleich der oder weniger als die Hälfte ihrer Wiederholungszeit ist; daß das Teilermittel (10) in der Übertragungeinheit Mittel enthält, welche das Ausgangslicht der ersten Lichtquelle kontinuierlich in zwei optische Wege (11,12) simultan teilen und daß zumindest eines der ersten und der zweiten optischen Mittel mit einem Mittel (15) versehen ist, welches den Lichtdurchgang verzögert.

8. Direktes Übertragungssystem von Bildern nach Anspruch 1, dadurch gekennzeichnet, daß die erste Lichtquelle (9) gepulstes Licht emittiert, daß das Teilermittel (10) in der Übertragungseinheit ein Mittel enthält, welches Lichtimpulse der ersten Lichtquelle selektiert und diese einem der zwei optischen Wege zuleitet.

9. Direktes Übertragungssystem von Bildern nach Anspruch 1, dadurch gekennzeichnet, daß die erste Lichtquelle (9) kontinuierlich Licht aussendet und das Teilermittel (10) in der Übertragungseinheit ein Mittel enthält, welches in einer Folge von Zeitpunkten des Ausgangslichts der ersten Lichtquelle auswählt und das selektierte Licht in einen der zwei optischen Wege leitet.

10. Direktes Übertragungssystem von Bildern nach Anspruch 1, dadurch gekennzeichnet, daß das Teilermittel (21) in der Empfangseinheit ein Tormittel (Fig. 9) enthält, welches das Ausgangssignal der optischen Übertragungsstrecke in einen der zwei optischen Wege (22,23) leitet synchron mit dem empfangenen gepulsten Licht, und daß das Signalanpassungsmittel (25) in der Empfangseinheit eine optische Verzögerungsschaltung enthält, welche in einen der zwei optischen Wege eingefügt ist.

11. Direktes Übertragungssystem von Bildern nach Anspruch 1, dadurch gekennzeichnet, daß das Teilermittel (21) in der Empfangseinheit ein Mittel enthält, welches das Ausgangssignal der optischen Übertragungsstrecke auf zwei optische Wege (22,23) aufteilt und daß das Signalanpassungsmittel (25) in der Empfangseinheit eine optische Verzögerungsschaltung enthält, welche in zumindest einem der zwei Wege eingefügt ist.

12. Direktes Übertragungssystem von Bildern nach Anspruch 1, dadurch gekennzeichnet, daß das Phasenverzerrungs-Kompensationsmittel (27,41) eine andere Lichtquelle einschließt, die eine Wellenlänge besitzt, welche nahezu gleich der Wellenlänge der ersten Lichtquelle (9) ist, sowie ein Mittel (27 (Fig. 5), welches aus nichtlinearem optischen Material besteht, in welchem eine Phasenverzerrung durch parametrische Wechselwirkung des Ausgangslichts von der anderen Lichtquelle und des Ausgangslichts von beiden der optischen Wege gleichzeitig kompensiert wird.

13. Direktes Übertragungssystem von Bildern nach Anspruch 1, dadurch gekennzeichnet, daß das Phasenverzerrungs-Kompensationsmittel (27,41) eine andere Lichtquelle (41) enthält, deren Wellenlänge nahezu gleich der Wellenlänge der ersten Lichtquelle ist; ein nichtlineares optisches Material (29), in welchem eine Phasenkonjunktionswelle zu einem der zwei Signalwellen von den optischen Ausgangswegen erzeugt wird durch Zuführen des Ausgangslichts dieser anderen Lichtquelle (41) und der einen Signalwelle; und ein Mittel (30), welches sekundär die andere der zwei Signalwellen und die Phasenkonjunktionswelle von dem nichtlinearen optischen Material mischt.

14. Direktes Übertragungssystem von Bildern nach Anspruch 13, dadurch gekennzeichnet, daß das Phasenverzerrungs-Kompensationsmittel ein Mittel (Fig. 8) zur Erzeugung einer Vierwellenüberlagerung enthält.

15. Direktes Übertragungssystem von Bildern nach Anspruch 7 oder 8, dadurch gekennzeichnet, daß die erste Lichtquelle (9) eine gepulste Oszillationslichtquelle des Direktmodulationstyps ist.

16. Übertragungssystem von Bildern nach Anspruch 7 oder 8, dadurch gekennzeichnet, daß die erste Lichtquelle (9) Licht emittiert, das mittels kontinuierlicher Modulation von Licht aus der Quelle pulsiert.

17. Übertragungssystem von Bildern nach Anspruch 3, dadurch gekennzeichnet, daß die erste Lichtquelle (9) gepulstes Licht erzeugt, daß das erste optische Mittel (14,15) in der Übertragungseinheit ein Mittel beinhaltet, welche n aufeinanderfolgende Lichtimpulse des gepulsten Lichts aufnimmt, welches von der ersten Lichtquelle herrührt; und daß das zweite optische Mittel (13,14) in der Übertragungseinheit ein Mittel einschließt, welches einen Lichtimpuls nachfolgend zu den n Lichtimpulsen des gepulsten Lichts aufnimmt, das von der ersten Lichtquelle emittiert wurde.

18. Direktes Übertragungssystem von Bildern nach Anspruch 3, dadurch gekennzeichnet, daß die erste Lichtquelle (9) gepulstes Licht erzeugt, daß das gepulste Ausgangslicht dieser ersten Lichtquelle eine Wiederholzeit besitzt, welche das $(n + 1)$-fache der Pulsdauer oder mehr beträgt, und daß das erste optische Mittel ein Mittel (43,44,45) einschließt, welches n unterschiedliche Zeitverzögerungen erzeugt, die kürzer sind als die Wiederholzeit für einen einzigen Lichtimpuls, der von der ersten Lichtquelle emittiert wurde.

19. Direktes Übertragungssystem von Bildern nach Anspruch 3, dadurch gekennzeichnet, daß das Mittel zur Erzeugung der Verzögerung in der Empfangseinheit ein Mittel (47,48,49) einschließt, welches Verzögerungen von n unterschiedlichen Längen erzeugt.

20. Direktes Übertragungssystem von Bildern nach Anspruch 3, dadurch gekennzeichnet, daß das Mittel (50), welches die Verzögerung in der Empfangseinheit erzeugt, ein Mittel einschließt, welches kontinuierlich während der Periode verzögert, in welcher n zweidimensionale Bilder vom Ausgang der optischen Übertragungsstrecke erhalten werden.

21. Direktes Übertragungssystem von Bildern nach Anspruch 20, dadurch gekennzeichnet, daß das Mittel für ein kontinuierliches Verzögern ein Fabry-Perot-Interferometer (50) ist.

FIG.1

FIG.2

FIG.3

FIG.4

FIG. 5

FIG. 6

(a)                              (b)

FIG. 7

FIG. 8

FIG. 9

FIG.10

FIG.11

$2T_0$

$T_0$

FIG.12

FIG. 13

FIG. 14

FIG. 15

FIG. 16